# EUROPEAN PATENT APPLICATION

(11) **EP 4 012 905 A1**
(43) Date of publication of application: **15.06.2022**
(21) Application number: 21208414.9
(22) Date of filing: 16.11.2021
(51) Int. Cl.: H02K 41/03, H02K 16/02, H02K 16/00, H02K 11/30, H02K 5/22, B65G 54/02, H02P 25/064, H01H 1/20, F16C 29/00, H02K 7/08, H02K 7/102, B23Q 1/58, B23Q 1/42, F16D 63/00

(54) **MULTIPLE-TROLLEY CONVEYOR SYSTEM IN AN OPEN LINEAR STRUCTURE**

(30) Priority: 10.12.2020 IT 202000030296
(71) Applicant: Mondial S.p.A., 20124 Milano (IT)
(72) Inventor: RIGOLONE, FRANCO, 24010 Ponteranica (BG) (IT)
(74) Representative: Franco Martegani S.r.l.

(57) **Abstract**

A multiple-mover(trolley)conveyor system in an open linear structure comprising
- a fixed linear guiding group or base section (11) which forms a supporting structure and at least one movable conveyor mover (16) between which supporting and guiding elements (15,22) are positioned,
- a linear motor drive unit which provides a first fixed stator unit (20) housed in said fixed linear guiding unit and at least one magnetic element (23) integral with said at least one movable mover (16),
- wherein said stator unit (20) is electrically powered from the outside through power (25) and signal (26) cables, wherein said first stator unit (20) has a fixing axis to the supporting structure perpendicular to a motor axis and perpendicular to a movement axis of said at least one mover (16);
- wherein said fixed linear guiding group houses at least one further fixed stator unit (220) aligned and subsequent to said first stator unit (20),
- wherein a power and signal transmission card (29) is positioned between said first stator unit (20) and said further stator unit (220),
- wherein said first stator unit (20) and said further stator unit (220) are arranged in a position interposed between a double group of supporting and guiding elements (15,22) arranged on the sides of the at least one mover (16) and of the fixed linear guiding group (11),
characterized in that
- said first stator unit (20) and said further stator unit (220) are arranged in a position interposed between a double group of supporting and guiding elements (15,22) arranged on the opposite ends of the at least one mover (16) and of the fixed linear guiding group (11), wherein each group of supporting and guiding elements comprises skids (22) and sliding guides (15) arranged at opposite ends of said base section (11) and of said mover (16) respectively.
- said first stator unit (20) has a fixing axis (38) to the supporting structure perpendicular to a motor axis (39) and said fixing and motor axes (38,39) define a plane whose normal is the sliding axis (40) of said at least one mover (16).

## Description

The present invention relates to a multiple-mover(trolley) conveyor system in an open linear structure.

Applications of "open" linear modules controlled by linear motors are known in the state of the art. In these known systems, motors electrically powered individually are required for each mover.

Each mover is in fact actuated by a "conventional" linear motor electrically powered and retro-operated individually. Furthermore, the power and signal cables are connected to the moving part, hence the need for using cable-carrier chains.

Finally, the dimensions of the components, in particular that of the power part (forcer), a movable part as it is assembled integral with each mover, limits the applicability in terms of the number of movers that can be used in the case of limited spaces.

And this involves complicated connections and the presence of multiple motors with relative costs.

Linear multi-mover modules in a "closed" structure with direct control are also known. An example is disclosed in EP 3038959 which relates to a conveyor device for moving products. The conveyor arrangement is mainly used for transporting products and/or containers in assembly, filling or packaging plants.

This known technique was created for solving the problems connected with previous known linear, rotating or integrated conveyor arrangements in which the conveyor units (also motor-driven units) are mounted on a linear, rotating or integrated guiding system.

The guide rails of the guiding system thus form a movement path, on which a plurality of single conveyor units are freely movable. The conveyor units can be moved through electromagnetic linear drives. Via these conveyor units, products in different formats can be transported individually and independently of each other.

This type of multi-mover linear module in a "closed" structure with direct control is mainly characterized in that each mover is driven by a newly designed linear motor. Said motor provides that the active control part (power and signal) is assembled integral with the fixed structure of the module. Furthermore, this active part is conceived according to a modularity concept, for which it is possible to connect various forcer power parts together with a suitable transmission card (transmission of electric power supply and management of the position signal). In this way, a generic working run is defined on which the independent movers slide. In addition; the magnets and the actuation component of the measurement circuit, necessary for generating the movement thrust of the mover and its position control, are mounted, for each mover, on a C-shaped support without the need for an external power supply.

It is also provided that the power cable and the signal cable of the powered unit be connected to the fixed stator part.

Furthermore, this system provides for having a single roller guiding system (manually adjustable) applied to each mover with an asymmetrical structure.

A further feature consists in the assembly of the stator part with the fixing axis (vertical motor plane) arranged parallel to the movement direction of the mover.

DE 10 2012 204919 relates to a conveyor system according to the preamble of claim 1 wherein a guide is arranged under a profile element which in turn carries a stator device under the same. The magnets are arranged on a guided mover or vehicle with respect to the single guide by means of rollers.

The general objective of the present invention is to provide a multiple-mover conveyor system in an open linear structure capable of solving the above-mentioned drawbacks of the known art in an extremely simple, economical and particularly functional way.

A further objective of the present invention is to provide a conveyor system with mover(s) that are well guided and capable of optimally supporting the work forces having application points that fall internally with respect to the sliding axes of the guiding systems.

Another objective of the present invention is to provide an easily reprogrammable conveyor system, through which it is possible to make a different number of movers, variable according to the different application requirements, active or operational.

Yet another objective of the present invention is to provide a system conceived for applying suitable stable and safe positioning systems of the individual movers, integrated with or external to the sliding guides, even when, during the operating phase, external forces are generated that disturb the maintenance of the programmed height or position.

A further objective of the present invention is to provide a system that allows it to be mounted horizontally, vertically or in a generic position in space.

Last but not least, an objective of the present invention is to identify a conveyor system which guarantees very low maintenance and reliable functioning.

The above objectives are achieved by a multiple-mover conveyor system in an open linear structure produced according to independent claim 1 and the following subordinate claims.

The structural and functional characteristics of the present invention and its advantages with respect to the known art will become even more evident from the following description, referring to the attached schematic drawings, which show an embodiment example of the invention. In the drawings:
figure 1 shows a perspective view of a multiple-mover conveyor system in an open linear structure according to the invention in which three conveyor movers are arranged and provided;
figure 2 is a raised side view of the system of figure 1;

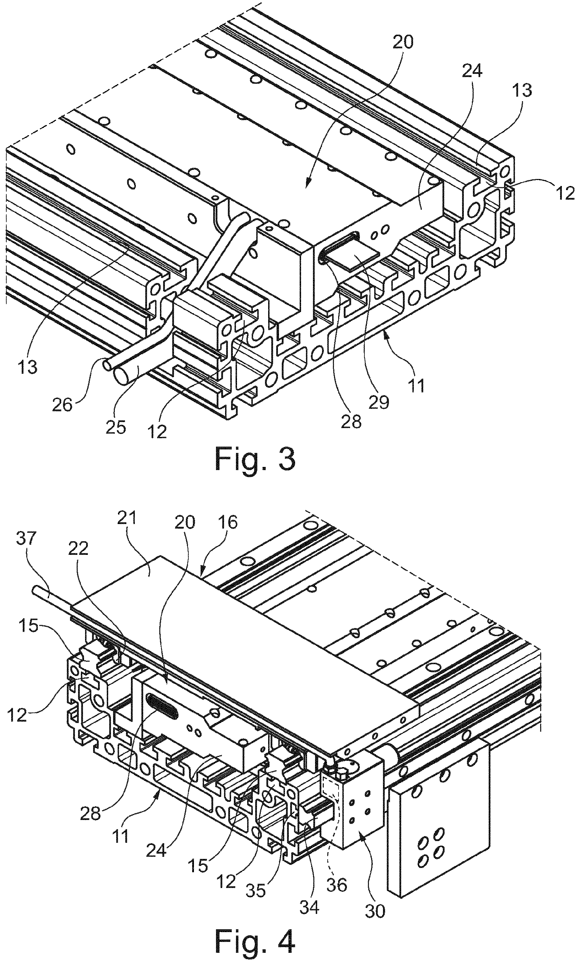

figure 3 is an enlarged perspective view of a first stator unit of the system of figure 1 without a conveyor mover;
figure 4 is an enlarged perspective view of a generic stator unit of the system of figure 1 in which a conveyor mover is also at least partially provided, with which a stoppage brake, partially exploded, is associated;
figure 5 is an enlarged cross-section of the multiple-mover conveyor system in an open linear structure according to the invention with a stoppage brake;
figure 5b is an enlarged cross-section of the multiple-mover conveyor system in an open linear structure according to the invention without a stoppage brake;
figure 5c is a section of a detail of figures 5 and 5b, representing, by way of example, a guide with recirculating balls;
figure 6 shows a multiple-mover conveyor system according to the present invention integrated in a generic assembly line in a purely exemplary application.

In the following description, for the illustration of the figures, identical reference numbers are used for indicating construction elements having the same function. Furthermore, for the clarity of illustration, some numerical references may not have been repeated in all the figures.

Indications such as "vertical" and "horizontal", "upper" and "lower" (in the absence of other indications) should be read with reference to the assembly (or operating) conditions and referring to the normal terminology used in current language, wherein "vertical" indicates a direction substantially parallel to that of the force of gravity vector "g" and horizontal a direction perpendicular to it.

With reference to the exemplary and non-limiting figures, these show an embodiment of a multiple-mover conveyor system in an open linear structure according to the invention.

Said multiple-mover conveyor system in an open linear structure essentially comprises a fixed linear guiding group and at least one movable conveyor mover between which supporting and guiding elements are arranged.

In particular, as shown in the figures, the linear guiding group provides a base section 11 equipped with positioning and lightening grooves which is fixedly arranged to form a bearing structure.

Fixing inserts 14 for sliding guides 15 for a conveyor mover 16 are arranged, for example, in the grooves 12 of the base section 11 facing upwards with openings 13. The grooves 12 of the base section 11 face the underlying part of the mover 16.

Furthermore, in a groove 17 there is a further fixing insert 18 for a square support 19 for fixing a stator motor 20.

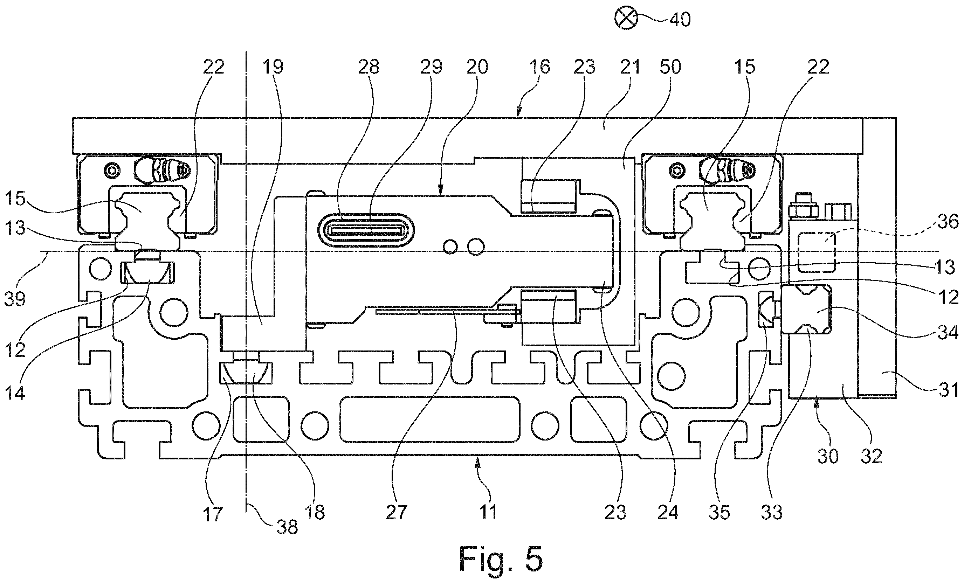

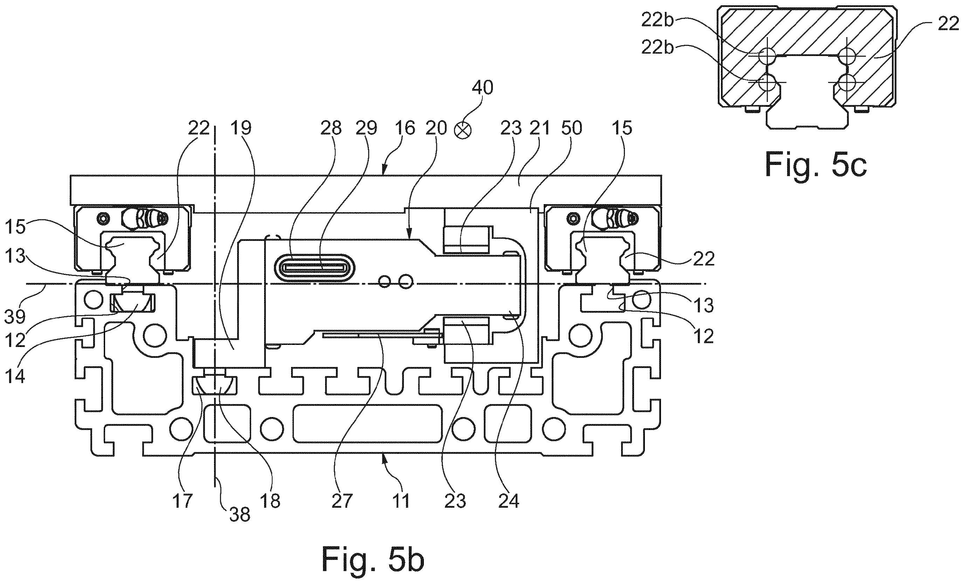

The conveyor mover 16 comprises a mover plate 21 under which recirculating-ball skids 22b (as in figure 5c) or rollers 22 are fixed, which receive the sliding guides 15 carried by the base section 11. In particular, these skids 22 and sliding guides 15 are arranged on opposite sides with respect to the stator motor 20 and form supporting and guiding elements for the conveyor mover 16. A C-shaped support 50 extends beneath the plate 21 of the conveyor mover 16, which carries a pair of magnets 23, sliding with the conveyor mover 16 to interact with an extension 24 of the stator motor 20.

A linear motor control group is thus created which provides a first fixed stator unit, i.e. the stator motor 20, housed inside the fixed linear guiding group or base section 11, and at least one magnetic element 23 integral with the movable conveyor mover 16.

It should be pointed out that the stator unit or stator motor 20 is electrically powered from the outside by means of power cables 25 and a signal cable 26. In particular, an actuation component of the measurement circuit 27 is positioned beneath the stator unit or stator motor 20. In the stator unit or stator motor 20, a power and signal transmission card 29 towards at least one further fixed stator unit 220 is also inserted in a suitable seat 28. According to the invention, in fact, there is the provision that a series of fixed stator units 220 can be arranged, aligned and subsequent to the first stator unit 20, arranged in the base section 11 of the linear guiding group to define any working area (work run).

It should be noted that the first stator unit 20 has an axis 38 for fixing to the base section 11 as a load-bearing structure perpendicular to a motor axis 39 and perpendicular to an axis 40 for moving the mover 16. This axis for moving the mover 40 is an axis to which the arrangement of all the stator units 20,220 of the system is parallel.

Said fixing and motor axes 38,39 define a plane whose normal is the sliding axis 40 of at least one mover 16.

As shown in the embodiment example of the figures, said first stator unit 20 and the one or more further stator units 220 are arranged in a position interposed between a double group of supporting and guiding elements, composed, as already indicated, of the skids 22 and the sliding guides 15.

In particular, according to the present invention, said supporting and guiding elements 15,22 are arranged at the sides of each mover 16 and section 11 of the fixed linear guiding group. It should be pointed out, however, that each group of supporting and guiding elements could also be produced by means of sliding elements.

More specifically, as is evident in particular from figure 5, it can be seen that each opposite end of the base section 11 carries sliding guides 15 which are engaged in recirculating-ball skids or rollers 22 fixed underneath opposite end areas of the mover plate 21 of the conveyor mover 16.

In this way, the first stator unit 20 and the one or more further stator units 220 are arranged in an interposed position between a double group of supporting and guiding elements.

Figure 5b shows a cross-section of the multi-mover conveyor system in a simplified form.

It can also be observed that, in a more complex form of the system, laterally with respect to each mover 16, a stoppage brake 30 (figure 5) can be provided. Said stoppage brake 30 comprises a support 31 integral with the plate 21 of the mover which extends downwards to flank the base section 11 of the fixed linear guiding group.

Said support 31 integrally bears a block 32 provided with a recessed seat 33 for receiving a braking guide 34 which is carried by and extends from a recess 35 formed laterally in the base section 11 of the fixed linear guiding group. The block 32 carries an actuator 36 in its interior, controlled from the outside of the mover. In the example, the actuator 36 is a pneumatic group such as a cylinder air-controlled by means of a supply tube or pipe 37 arranged onboard the mover 16 which acts for blocking the mover 16 on the braking guide 34 arranged laterally and integral with the base profile 11 of the fixed linear guiding group.

As an alternative to the pneumatic group, an electromagnetically controlled unit can be used as actuator.

Said stoppage brake 30 can be actuated from the outside and allows a mover 16 to be mechanically blocked in order to counteract, for example, the "disturbances" generated by the reaction forces that arise during the working phase of the machine inside which the open linear section module of the present invention is inserted when the mover (or one of the movers) is stationary in the programmed position.

The effectiveness of this stoppage brake, in particular when the above-mentioned external disturbing forces exceed the nominal limits for which the same electric motor has been designed, extends the field of applicability of the invention safely and economically, and allows, for example, the design and construction of complex and expensive cooling systems/circuits to be avoided, otherwise essential for the disposal of the surplus heat generated by the power supply overcurrents of the electric motor, through which the force peaks required for counteracting the above-mentioned external working forces are generated.

Furthermore, the presence of the stoppage brake makes it possible to mount the conveyor system according to the present invention in a horizontal or vertical position (or in any case generic in space), as it is capable of mitigating the negative effects of external disturbance generated by the gravitational force.

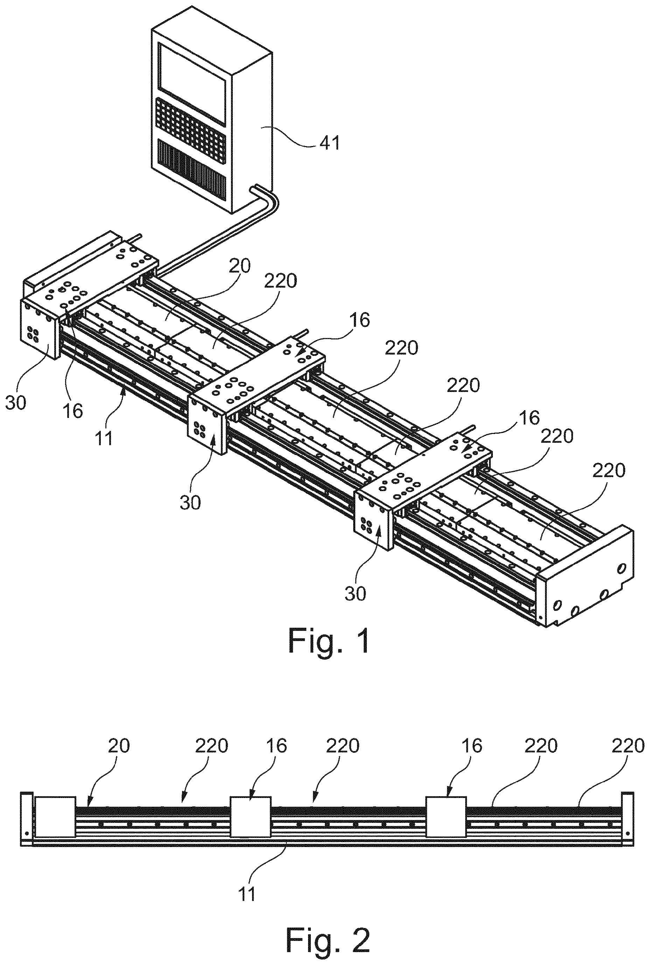

As already mentioned, the example shown in figure 2, makes it possible to use a series of movers and therefore the arrangement of a certain number of easily reprogrammable work stations. This shows the flexibility and modularity of a solution that uses a system according to the present invention.

It can therefore be observed that in a multi-mover conveyor system in an "open" linear structure with movers controlled by an automation system, there is the presence of a first fixed motor electrically powered from the outside (with power and signal cables), whereas the other motors are powered directly from the inside through the transmission card 29 as shown.

Each mover 16 can therefore be programmed independently in both movement directions, i.e. from right to left and vice versa by a central control unit (CPU) 41 with management of collision areas via a keyboard, a video electrical cabinet for HW components as shown in figure 1.

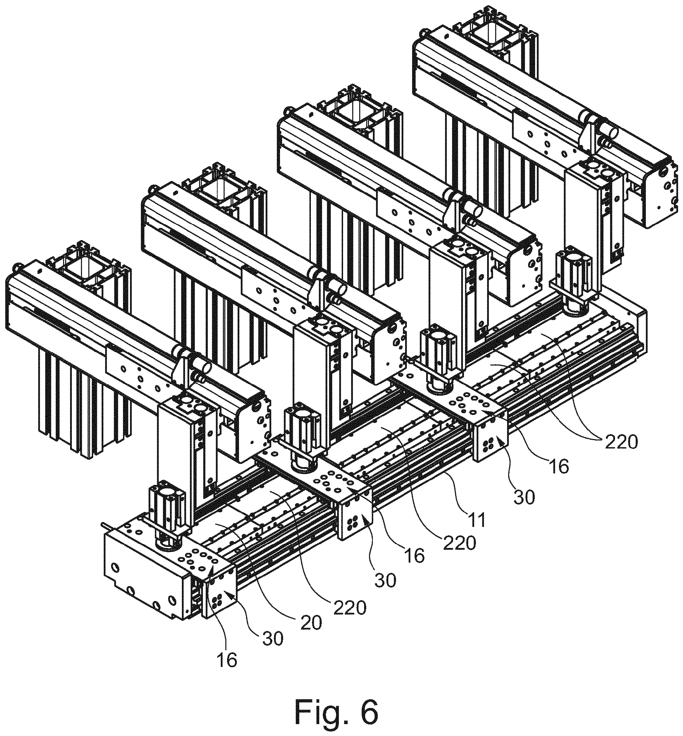

Figure 6 shows a conveyor system with multiple movers according to the present invention integrated in a generic assembly line in a purely exemplary application.

The double arrangement of the sliding guide at opposite ends of the base section 11 and of the mover 16 with respect to the interposed stator units 20,220 creates an optimal reaction to the inertial and working forces and guarantees a homogeneous and intrinsically precise translation for the mover.

It has thus been seen that the best coupling stiffness is obtained by means of a conveyor system with a mover guided by a double guiding system according to the invention. In this way, the system of the invention is capable of optimally supporting the work forces having application points which fall internally with respect to the sliding axes of the guiding systems which is a symmetrical system.

Furthermore, a conveyor system according to the present invention can advantageously be easily reprogrammed. In this type of system it is therefore possible to make a different number of movers, variable according to the different application requirements, active or operational.

A further important advantage lies in having a system designed for applying suitable blocking systems, such as stoppage brakes, of the individual movers. These blocking systems are integrated with or external to the sliding guides. This arrangement makes the application of the system also suitable in the event that, during the working phase, external disturbing forces be generated for maintaining the height programmed. It is in fact important to note that the motor does not have to work to react to these in order to maintain a position with respect to external and even involuntary stress.

It is thus possible to have a system which allows, through the above-mentioned blocking system of the movers in the working positions, assembly to be effected horizontally, vertically or in a generic position in space.

The arrangement of the motor with the fixing axis to the structure perpendicular to the motor axis (horizontal motor plane) and perpendicular to the movement axis of the mover, as shown in figure 5, obtained with the use of the square support 19, allows the dimensions of the section of the conveyor system to be optimized, in particular its development in a vertical direction, simplifying the assembly of the stator part and access for its possible maintenance.

According to the invention, the positioning of the motor (point of application of the thrust force) is also effected inside the sliding guides.

The positioning of the guiding elements in the external area of the mover plate 16 allows the reaction forces to be kept inside the same during the movement phase (i.e. inertial forces) and working phase (i.e. external disturbance forces).

The objective mentioned in the preamble of the description has thus been achieved.

The protection scope of the present invention is defined by the enclosed claims.

## Claims

1. A multiple-mover(trolley)conveyor system in an open linear structure comprising
- a fixed linear guiding group or base section (11) which forms a supporting structure and at least one movable conveyor mover (16) between which supporting and guiding elements (15,22) are positioned,
- a linear motor drive unit which provides a first fixed stator unit (20) housed in said fixed linear guiding unit and at least one magnetic element (23) integral with said at least one movable mover (16),
- wherein said stator unit (20) is electrically powered from the outside through power (25) and signal (26) cables,
- wherein said fixed linear guiding group houses at least one further fixed stator unit (220) aligned and subsequent to said first stator unit (20),
- wherein a power and signal transmission card (29) is positioned between said first stator unit (20) and said further stator unit (220),
**characterized in that**
- said first stator unit (20) and said further stator unit (220) are arranged in a position interposed between a double group of supporting and guiding elements (15,22) arranged on the opposite sides of the at least one mover (16) and of the fixed linear guiding group (11), wherein each group of supporting and guiding elements comprises skids (22) and sliding guides (15) arranged at opposite ends of said base section (11) and of said mover (16) respectively.
- said first stator unit (20) has a fixing axis (38) to the supporting structure perpendicular to a motor axis and said fixing and motor axes (38,39) define a plane whose normal is the sliding axis (40) of said at least one mover (16).

2. The conveyor system according to claim 1, **characterized in that** said skids of said group of supporting and guiding elements are recirculating balls or rollers (22).

3. The conveyor system according to claim 1, **characterized in that** said skids of said group of supporting and guiding elements are sliding skids.

4. The conveyor system according to claim 1, **characterized in that** said first stator unit (20) and said further stator unit (220) are fixed on a square support (19).

5. The conveyor system according to claim 1, **characterized in that** said supporting and guiding elements (15,22) are arranged at opposite ends of a plate (21) of each mover (16) and extend from grooves (12) of the base section (11) of the fixed linear guiding group.

6. The conveyor system according to one or more of the previous claims from 1 to 5, **characterized in that** a stoppage brake (30) is also provided, positioned between said at least one mover (16) and said base section (11) which can be actuated from the outside by means of an actuator.

7. The conveyor system according to claim 6, **characterized in that** said stoppage brake (30) comprises a support (31) integral with a plate (21) of the respective mover (16) which extends downwards to flank the base section (11) of the fixed linear guiding group.

8. The conveyor system according to claim 7, **characterized in that** said support (31) integrally bears a block (32) provided with a recessed seat (33) for receiving a braking guide (34) which is carried and extends from a recess (35) formed laterally in the base section (11) of the fixed linear guiding group, said block (32) containing in its interior said actuator (36) controlled from the outside of the mover.

9. The conveyor system according to claim 6, 7 or 8, **characterized in that** said actuator (36) is a pneumatic group controlled by air through a supply tube (37) arranged onboard the mover (16) which acts for blocking the mover (16) on the braking guide (34) arranged laterally integral with the base section (11) of the fixed linear guiding group.

10. The conveyor system according to claim 6 or 7 or 8, **characterized in that** said actuator (36) is an electromagnetically controlled group arranged onboard the mover (16) which acts to block the mover (16) on the braking guide (34) positioned laterally integral with the base section (11) of the fixed linear guiding group.
